# EUROPEAN PATENT APPLICATION

(11) **EP 4 122 629 A1**
(43) Date of publication of application: **25.01.2023**
(21) Application number: 21382651.4
(22) Date of filing: 19.07.2021
(51) Int. Cl.: B23B 29/034, B23B 41/02, B23B 41/06

(54) **ACTUATION MECHANISM FOR RADIAL MOVEMENT OF A CUTTING TOOL OF A BORING BAR**

(71) Applicant: Fundación Tekniker, 20600 Eibar (Guipuzkoa) (ES)
(72) Inventor: GONZALO DE FRANCISCO, OSCAR, 20600 Eibar (Guipúzcoa) (ES); CUEVAS ETTCHETO, ASIER, 20600 Eibar (Guipúzcoa) (ES); GARMENDIA OTAEGUI, KEPA, 20600 Eibar (Guipúzcoa) (ES)
(74) Representative: Balder IP Law, S.L.

(57) **Abstract**

Actuation mechanism for radial movement for a boring bar to perform bottle bores in a rotational workpiece. The integrated actuation allows a more compact design leaving space for other systems in the boring bar and it allows a shorter kinematic chain providing a more precise movement and a stiffer design.

The actuation mechanism (1) is located near the cutting tool (10), providing a controlled movement of the radial position.

## Description

### Field of disclosure

The disclosure refers to a boring bar for machining of bottle bore in shafts, in particular for aeronautic engines with a high ratio length to diameter and thin walls. It is related to the mechanism used to modify the tool radial position during machining.

### Background of the disclosure

The manufacturing of precision shafts (for example, those used in aircraft engines) is a challenging manufacturing process, especially to achieve tighter requirements related to accuracy, performance and repeatability in a cost-effective way.

Machining processes for aeroengine components are driven by the material, the geometry and the specific requirements attending to the function of the component. The size, weight, aspect ratio and rigidity of each component affect the manufacturing process.

Regarding the shafts, these require specific multi-purpose mill/turn machine tools to cope with internal machining of the bore area and to allow efficient machining of turned, milled and drilled features in one set up. The main targets of the manufacturing processes are a high Length to Diameter ratio, high material removal rate, good surface integrity, small wall thickness and tight geometrical tolerances.

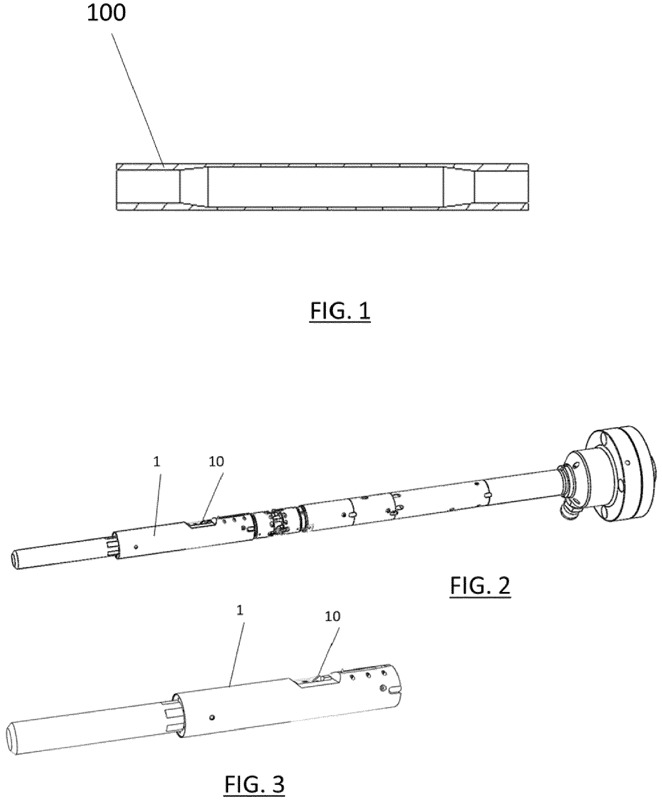

The geometry of these shafts is characterized by inside bottle bores, that consist in a bore with an inside longitudinal diameter greater than the diameter in the tip ends of the bore of the shaft, as shown in figure 1.

The machining of these bottle bores is performed with large boring bars located concentric to the workpiece in numerically controlled machines to perform the axial movement along the bore, and an additional axis for the radial movement of the cutting tool. This kind of systems allows bottle boring operations on large shafts using both approaches, rotating tool or rotating workpiece. The radial movement of the cutting tool is achieved using an inner quill actuated from the fixed point of the boring bar. The inner quill actuates a mechanism that produces the controlled radial movement of the cutting tool to perform the machining process of the desired geometry.

The actuation mechanism of the inner quill is normally done from the fixed end of the boring bar with an electromechanical actuation controlled by the CNC. This leads to the use of long inner quill that must be guided to maintain the stiffness and precision of the movement.

The inner quill is connected to a mechanism that modifies the radial position of the cutting tool. Common alternatives are linked, lever, scissors or wedge mechanisms.

The boring bar is commonly centred in the workpiece bore and the stroke needed to enlarge the initial bore to the bottle shape is normally of several millimetres. The design of the boring bar is normally modular to be adapted to different shaft lengths.

The state of the art in the tooling systems for bottle bore geometries with high L/D ratio is represented by the products offered by companies like COGSDILL, BGTB, UNISIG, ITS TOOLING or BTA HELLER, being COGSDILL the leader of this kind of applications.

EP0307823 discloses a bottle bore milling tools with a rotating eccentric tool, that limits the machining of large shafts compared to centred static boring bars.

US8506210 discloses a system with a similar functionality but it does not explain the mechanism behind the tool actuation.

US8123441 discloses common quill (or drive shaft) element without specifying the actuation mechanism.

US20110079120 discloses a wedge mechanism to provide the radial motion of the tool, moved by a quill without explaining the actuation mechanism.

US3854839, US4307636, US4347768, US4043695 and US4411324 disclose a system for the radial movement of the tool with a linked mechanism with levers actuated by an internal quill without indicating how this quill is moved.

US2873632A and US20010022920 disclose different mechanisms for the radial movement of the cutting tool actuated by hydraulic systems.

### Summary of the disclosure

The present disclosure is directed to a bottle boring tool and similar systems that work inserted into a bore of a shaft. The tool is moved axially along the shaft to perform the internal machining processes to obtain bottle bore shapes. The boring is performed by a cutting tool with a controlled axial position to modify the machining diameter.

Special tools known in the art for this type of machining have the cutting tool with a radial movement normally driven by a rod that goes through the center of the boring bar. The motor is placed at the fixed end of the bar next to the machine turret.

The present disclosure allows to integrate the complete drive near the cutting tool so that only the electric cables and cutting fluid pipes pass inside the boring bar.

Thus, the present disclosure comprises the following new features:
- Integration of the electromechanical actuation.
- Position control near the cutting tool with the motor encoder.
- Improvement of the rigidity and precision of the kinematic chain.

Some of the advantages of the present disclosure are:
- Integrated electromechanical actuation for a more compact boring bar structure and reduction of the kinematic chain.
- Improved positioning accuracy of the cutting tool.
- Improved drive rigidity.
- Simplification of bar manufacturing and ease of modularization.

The present disclosure provides an actuation mechanism integrated in the boring bar to provide the movement of the radial positioning axis of the cutting tool. The actuation mechanism of the present disclosure can also be applied to a mechanism to provide an internal support of a workpiece to position said workpiece with respect to the cutting tool.

The actuation mechanism comprises an electromechanical system with different elements to provide an axial movement that finally is transformed into a radial movement with a wedge mechanism.

The actuation mechanism may comprise a motor with an encoder, an elastic coupling (also known as shaft coupling, flexible coupling), a screw and a nut. This arrangement provides the radial positioning of the cutting tool controlled by the CNC of the machine tool, and the machining process is performed by the workpiece rotation and the boring bar axial displacement. The elastic coupling, or shaft coupling or flexible coupling is a device used for the longitudinal joining of two rotating parts of a machine (usually shafts), designed to compensate for the relative displacement of the parts' axes and to absorb the shocks caused by joining the parts. For instance, a shaft coupling is a mechanical component that connects the drive shaft and driven shaft of a motor, etc., in order to transmit power.

The disclosure overcomes the disadvantages of the prior art and provides an integrated actuation mechanism providing a direct actuation that reduce the kinematic chain, improving the stiffness and the precision of the tool radial movement. The encoder controls the position of the motor and indirectly the radial position of the cutting tool, avoiding the error associated to the torsion and play of internal quills used in the prior art.

The elimination of the common quill system in the systems known in the art simplifies the system avoiding friction and play that affect the boring bar and process performance. Furthermore, the motor normally included in the systems known in the art in the machine tool turret is also removed, thus simplifying the interface between the boring bar and the machine tool.

The integration of the motor near the location of the cutting tool, where the radial movement of the cutting tool is achieved, also results in a simplified mechanical structure of the boring bar, an easier manufacturing process and an easy way for modularization of the tool body, given that an internal quill must not be adapted (only the length of the electric cables and the pipes supplying cutting fluid must be changed).

Thus, the present disclosure solves the problem by providing an electromechanical actuation mechanism integrated in the boring bar to improve the precision of the cutting tool movement by eliminating mechanical components and/or placing the mechanical components closer to the working area.

Also, possible areas of friction, failure or backlash that worsen the performance and reliability of the boring bar are diminished.

### Brief description of the drawings

Fig. 1 shows a typical shaft with a bottle bore shape which can be manufactured with a tool including the mechanism of the disclosure.
Figs. 2 and 3 show the global design of a boring bar with the integrated actuation mechanism.
Figs. 4 and 5 show a detail of the wedge mechanism to transform the axial movement into a radial movement. Fig. 4 shows the mechanism with the cutting tool in the retracted position; Fig. 5 shows the mechanism with the cutting tool in the extracted or deployed position.
Fig. 6 is an example of the typical quill mechanism of the state of the art.
Fig. 7 shows an integrated embodiment of the disclosure.
Fig. 8 shows a detail of a wedge mechanism of the tool radial movement subsystem of the disclosure of Fig. 7.

### Detailed description of the disclosure

The disclosure relates to an actuation mechanism for radial movement of a cutting tool (10) of a boring bar comprising:
a tool body (1);
a mechanism (8, 9) located inside the tool body (1) comprising:
   an axial block (8) configured to be guided along an axial movement inside the tool body (1);
   a radial block (9) configured to be guided along a radial movement in the tool body (1) to provide the cutting tool (10) with a radial movement between:
      a retracted position where the cutting tool (10) is placed in an idle position configured to avoid contact to a workpiece (100) as the one shown in Fig. 1 ; when the cutting tool (10) is in the idle position, radial protrusion of the cutting tool (10) over the tool body (1) is negligible; and
      a deployed position where the cutting tool (10) is placed in a working position configured to contact a workpiece (100) when the cutting tool (10) is in the working position, radial protrusion of the cutting tool (10) over the tool body (1) is apparent;
movement to the radial block (9) is provided by the axial block (8);
wherein the cutting tool (10) is connected to the radial block (9);
wherein: the axial block (8) is adjacent to the radial block (9).

Figs. 2 and 3 show the position of the cutting tool (10) on the tool body (1).

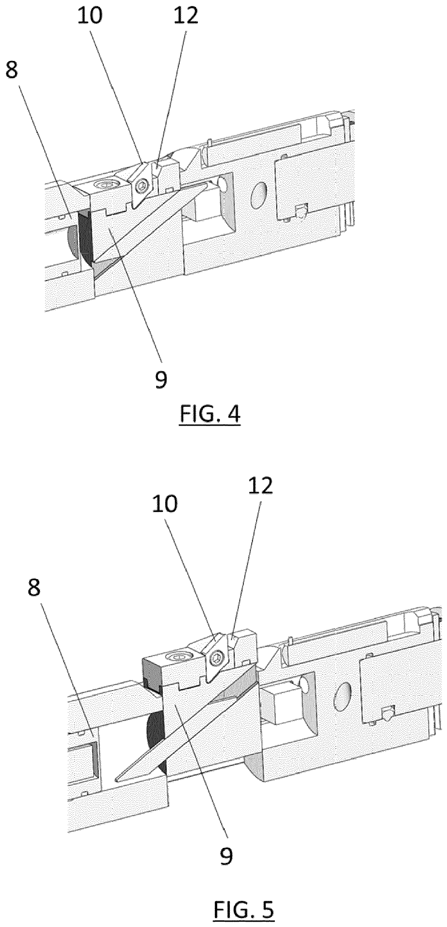

Fig. 4 shows the mechanism (8, 9) with the cutting tool (10) in the retracted position. This retracted position enables the tool body (1) to be moved with respect to the workpiece (100) avoiding damage to the workpiece (100) and to the cutting tool (10). This retracted position enables to position the cutting tool (10) in the proper position to start working on the workpiece (100). Once the cutting tool (10) has finished working on the workpiece (100), the cutting tool (10) is again moved to the retracted position and the tool body (1) can also be moved with respect to the workpiece (100).

Fig. 5 shows the mechanism (8,9) with the cutting tool (10) in the extracted or deployed position. This extracted or deployed position is where the cutting tool (10) is working on the workpiece (100).

The mechanism (8,9) moves the cutting tool (10) between the retracted position, when the cutting tool (10) is not working on the workpiece, and the extracted or deployed position, when the cutting tool (10) is working on the workpiece (100).

The mechanism (8,9) also moves the cutting tool (10) during work on the workpiece (100) to perform a pattern or programmed machining on the workpiece (100). Thus, the mechanism (8,9) performs both movements: the transition movement of the cutting tool (10) between the extracted or deployed position and the retracted position and the working movement of the cutting tool (10) when the cutting tool (10) is machining the workpiece (100).

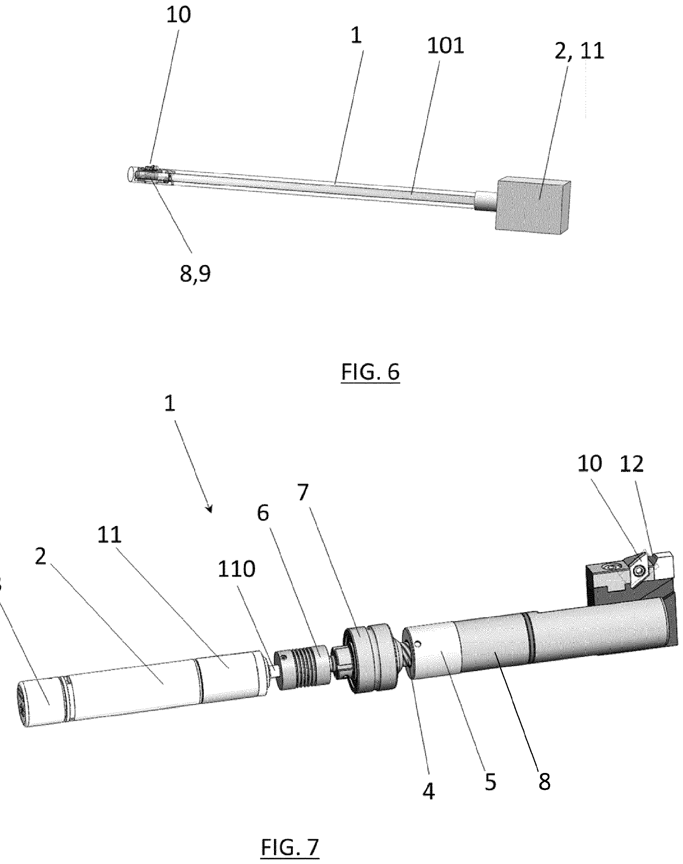

The actuation mechanism of the disclosure avoids the use of a quill (101) as the one shown in Fig. 6.

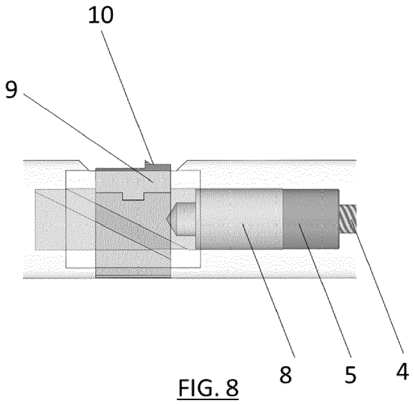

As show in Figs.7 and 8:
the axial block (8) is configured to be moved by a linear actuation assembly comprising:
a nut (5) configured to be axially moved along an axial movement inside the tool body (1);
a screw (4) configured to spin along an axial axis in the tool body (1) to axially move the nut (5) inside the tool body (1);
a reduction gearbox (11) configured to provide the screw (4) with a spinning speed and a torque suitable for the radial movement of the cutting tool (10);
a coupler (6) to couple an output shaft (110) of the reduction gearbox (11) to the screw (4);
a motor (2) configured to generate a spinning movement of the screw (4).

As show in Fig. 7, the actuation mechanism may also comprise:
an encoder (3) configured to control an angular position of the motor (2).

The motor (2) may be a motor enabled to be position controlled so that angular position of the motor (2) is controlled. The motor (2) may be a motor selected from a step-by-step motor a DC motor, a brushless motor and a servomotor.

As show in Fig. 7, the actuation mechanism may also comprise:
a bearing (7) to guide and support moving parts of the actuation mechanism.

As show in Figs. 4, 5 and 7, the actuation mechanism may also comprise:
a high-pressure coolant nozzle (12) located in a proximity of the cutting tool (10) so as to provide cooling to the cutting tool (10). The coolant nozzle (12) enhances the machining, both preserving the cutting tool (10) and the workpiece (100). On the one hand, lifespan of the cutting tool (10) is increased and, on the other hand, working conditions on the workpiece are improved: faster working and better accuracy and tighter tolerances may be achieved.

As show in Figs. 4, 5, 7 and 8, the mechanism (8, 9) may be a wedge mechanism. The wedge mechanism is a robust structure which enables to achieve the performance requirements in the machining operations carried out by the cutting tool (10) on the workpiece (100) while being a relatively simple structure to keep in working order without complicated maintenance operations.

The disclosure also relates to a boring tool comprising the actuation mechanism according to the description above.

## Claims

1. Actuation mechanism for radial movement of a cutting tool (10) of a boring bar comprising:
a tool body (1);
a mechanism (8, 9) located inside the tool body (1) comprising:
an axial block (8) configured to be guided along an axial movement inside the tool body (1);
a radial block (9) configured to be guided along a radial movement in the tool body (1) to provide the cutting tool (10) with a radial movement between:
a retracted position where the cutting tool (10) is placed in an idle position configured to avoid contact to a workpiece (100); and
a deployed position where the cutting tool (10) is placed in a working position configured to contact a workpiece (100);
movement to the radial block (9) is provided by the axial block (8);
wherein the cutting tool (10) is connected to the radial block (9);
**characterized in that**:
the axial block (8) is adjacent to the radial block (9).

2. Actuation mechanism according to claim 1 **characterized in that**:
the axial block (8) is configured to be moved by a linear actuation assembly comprising:
a nut (5) configured to be axially moved along an axial movement inside the tool body (1);
a screw (4) configured to spin along an axial axis in the tool body (1) to axially move the nut (5) inside the tool body (1);
a reduction gearbox (11) configured to provide the screw (4) with a spinning speed and a torque suitable for the radial movement of the cutting tool (10);
a coupler (6) to couple an output shaft (110) of the reduction gearbox (11) to the screw (4);
a motor (2) configured to generate a spinning movement of the screw (4).

3. Actuation mechanism according to claim 2 **characterized in that** it comprises:
an encoder (3) configured to control an angular position of the motor (2).

4. Actuation mechanism according to claim 2 **characterized in that** the motor (2) is a motor enabled to be position controlled so that angular position of the motor (2) is controlled.

5. Actuation mechanism according to claim 4 **characterized in that** the motor (2) is a motor selected from a step-by-step motor, a DC motor, a brushless motor and a servomotor.

6. Actuation mechanism according to any of the preceding claims **characterized in that** it comprises:
a bearing (7) to guide and support moving parts of the actuation mechanism.

7. Actuation mechanism according to any of the preceding claims **characterized in that** it comprises:
a high-pressure coolant nozzle (12) located in a proximity of the cutting tool (10) so as to provide cooling to the cutting tool (10).

8. Actuation mechanism according to any of the preceding claims **characterized in that** the mechanism (8, 9) is a wedge mechanism,

9. A boring tool **characterized in that** it comprises the actuation mechanism according to any of the preceding claims.
